(19) **Europäisches Patentamt**
**European Patent Office**
**Office européen des brevets**

(11) **EP 3 865 711 B1**

(12) **EUROPÄISCHE PATENTSCHRIFT**

(45) Veröffentlichungstag und Bekanntmachung des Hinweises auf die Patenterteilung:
**22.10.2025 Patentblatt 2025/43**

(21) Anmeldenummer: **21150833.8**

(22) Anmeldetag: **11.01.2021**

(51) Internationale Patentklassifikation (IPC):
**F04D 25/06** (2006.01)    **F04D 25/08** (2006.01)
**F04D 29/28** (2006.01)    **F04D 29/32** (2006.01)
**F04D 29/58** (2006.01)    **H02K 9/06** (2006.01)

(52) Gemeinsame Patentklassifikation (CPC):
**F04D 25/082; F04D 25/0613; F04D 25/064; F04D 29/281; F04D 29/329; F04D 29/5806; H02K 7/14; H02K 9/06**

(54) **VENTILATOR MIT ABDECKSCHEIBE AN DER ROTORGLOCKE**

FAN WITH COVER PLATE ON THE ROTOR BELL

VENTILATEUR POURVU DE PLAQUE DE RECOUVREMENT SUR LA CLOCHE DE ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2020 DE 102020103772**

(43) Veröffentlichungstag der Anmeldung:
**18.08.2021 Patentblatt 2021/33**

(73) Patentinhaber: **EBM-PAPST ST. GEORGEN GMBH & CO. KG**
**78112 St. Georgen (DE)**

(72) Erfinder:
• **Dr. Ing. KEBER, Roland**
**84109 Wörth a. d. Isar (DE)**
• **SIEGER, Tobias**
**78187 Geisingen (DE)**
• **LAUFER, Wolfgang**
**78733 Aichhalden (DE)**
• **GÜNTER, Clemens**
**78144 Schramberg (DE)**

(74) Vertreter: **Staeger & Sperling**
**Partnerschaftsgesellschaft mbB**
**Sonnenstraße 19**
**80331 München (DE)**

(56) Entgegenhaltungen:
**EP-A1- 3 540 238      DE-A1- 102005 006 183**
**JP-A- 2015 139 225      JP-A- H10 210 727**
**US-A1- 2002 141 866      US-A1- 2007 152 519**

EP 3 865 711 B1

**Beschreibung**

Die Erfindung betrifft einen Ventilator mit einem verbesserten Geräuschverhalten.

Aus dem Stand der Technik ist es bekannt, bei Ventilatoren insbesondere mit Außenläufermotoren Kühlbohrungen in der Rotorglocke vorzusehen, um neben dem durch das Ventilatorrad geförderten Hauptvolumenstrom einen Kühlluftstrom durch das Innere der Rotorglocke vorbei an den wärmeerzeugenden Motorbauteilen zu ermöglichen. Beispielhaft kann hierzu auf die Offenbarung der DE 10 2013 108 506 A1 verwiesen werden. Weiterer Stand der Technik im vorliegenden technischen Gebiet ist aus den Dokumenten DE 10 2005 006 183 A1, US 2002/141866 A1, JP H10 210727 A, JP 2015 139225 A, US 2007/152519 A1 und EP 3 540 238 A1 bekannt. Ein zusätzlicher Kühlluftstrom durch die Rotorglocke, der anschließend dem Hauptvolumenstrom zugeführt wird, führt jedoch meist zu einem höheren Geräuschniveau des Ventilators.

Der Erfindung liegt deshalb die Aufgabe zugrunde, einen Ventilator bereit zu stellen, der neben dem Hauptvolumenstrom einen Kühlluftstrom zur Kühlung von Motorbauteilen ermöglicht, ohne dass akustische Verschlechterungen hinzunehmen sind oder diese zumindest verringert werden.

Diese Aufgabe wird durch die Merkmalskombination gemäß Patentanspruch 1 gelöst.

Erfindungsgemäß wird ein Ventilator umfassend ein Ventilatorrad mit einer Laufradnabe und Laufradschaufeln sowie einen Elektromotor, insbesondere Außenläufermotor, mit einem Stator, einem um einen Rotationsachse rotierbaren Rotor und einer Rotorglocke vorgeschlagen. Die Rotorglocke weist einen axial stirnseitigen Rotorglockenboden und einen umfänglichen Rotorglockenmantel auf, wobei die Laufradnabe an der Rotorglocke befestigt ist. In dem Rotorglockenboden ist mindestens ein Durchbruch zur Gewährleistung eines Kühlluftstromes aus der Rotorglocke oder in die Rotorglocke vorgesehen. Der Ventilator weist ferner eine an dem Rotorglockenboden angeordnete Abdeckscheibe mit einer Zentralöffnung auf, welche den mindestens einen Durchbruch des Rotorglockenbodens axial beabstandet in Projektion gesehen zumindest abschnittsweise, vorzugsweise vollständig überdeckt, so dass zwischen dem Rotorglockenboden und einer Innenfläche der Abdeckscheibe ein sich radial einwärts erstreckender Strömungskanal zur Zentralöffnung der Abdeckscheibe gebildet ist. Die Abdeckscheibe weist zumindest auf ihrer der Innenfläche gegenüberliegenden Außenfläche nach radial außen einen schrägen oder gekrümmten Verlauf in Richtung des Rotorglockenbodens auf.

Über den mindestens einen Durchbruch im Rotorglockenboden kann ein an den in der Rotorglocke aufgenommenen Motorbauteilen, wie beispielsweise den Stator, vorbeigeführter Kühlluftstrom aus der Rotorglocke heraus geleitet und dem über das Ventilatorrad erzeugten Hauptvolumenstrom des Ventilators zugeführt werden. Durch die Abdeckscheibe wird der Kühlluftstrom dabei speziell geführt, nämlich von der axialen Ausströmung durch den mindestens einen Durchbruch zunächst nach radial einwärts im durch die Abdeckscheibe begrenzten Strömungskanal bis zu ihrer Zentralöffnung und anschließend in die entgegengesetzte Richtung radial auswärts. Durch den nach radial außen schrägen oder gekrümmten Verlauf der Außenfläche der Abdeckscheibe in Richtung des Rotorglockenbodens erfährt die Strömungsrichtung des Kühlluftstromes neben der radialen auch eine axiale Komponente entlang der Außenfläche der Abdeckscheibe. Die Strömung des Kühlluftstroms legt sich dabei vorteilhaft an die Außenfläche der Abdeckscheibe an. Die Strömungsrichtung des Kühlluftstromes kann genauso in die entgegengesetzte Richtung in die Rotorglocke hinein gerichtet sein. Im Ergebnis reduziert sich die durch den Kühlluftstrom bedingte Geräuschentwicklung des Ventilators.

Eine vorteilhafte Ausführungsform sieht dabei vor, dass die Abdeckscheibe einen Überstreckungsabschnitt aufweist, der den mindestens einen Durchbruch in radialer Richtung vollständig überstreckt. Somit ist sichergestellt, dass der gesamte durch den mindestens einen Durchbruch axial austretende Kühlluftstrom zunächst gegen die Abdeckscheibe trifft und radial einwärts geführt wird.

Eine bezüglich der Geräuschreduzierung vorteilhafte Weiterbildung des Ventilator ist dadurch gekennzeichnet, dass die Abdeckscheibe neben dem Überstreckungsabschnitt, der den mindestens einen Durchbruch in radialer Richtung vollständig überstreckt, einen sich an den Überstreckungsabschnitt unmittelbar anschließenden Überlappungsabschnitt aufweist, in dem die Abdeckscheibe sich über den mindestens einen Durchbruch hinaus erstreckt und in Projektion gesehen mit dem an den mindestens einen Durchbruch radial einwärts angrenzenden Rotorglockenboden überlappt. Der Überlappungsabschnitt führt zu einer besonders günstigen Beeinflussung der Strömung des Kühlluftstromes nach dem Austritt aus dem mindestens einen Durchbruch des Rotorglockenbodens und verlängert die Führung zunächst nach radial einwärts, bevor der Kühlluftstrom in die Hauptströmung entlassen wird. Die Nachbehandlung des Kühlluftstroms nach dem Austritt durch den Rotorglockenboden ist somit verstärkt.

Der mindestens eine Durchbruch ist in einer Ausführung als Öffnung mit einem Durchmesser D ausgebildet. Eine besonders vorteilhafte geräuschreduzierende Wirkung wird dann erreicht, wenn eine Erstreckung des Überlappungsabschnitts in radialer Richtung eine gewisse Länge UE aufweist, wobei gilt, dass $0{,}5 \leq UE/D \leq 1{,}5$. In diesem Bereich ist die Wirkung der Nachbehandlung des Kühlluftstroms nach dem Austritt durch den Rotorglockenboden in radial einwärtiger Richtung besonders gut.

Ferner sieht eine Ausführungsform des Ventilators vor, dass sich der geradlinig schräge oder gekrümmte Verlauf der Außenfläche der Abdeckscheibe durchgängig ausgehend von einem Rand der Zentralöffnung der Abdeckscheibe erstreckt. Zudem ist ein stetiger Verlauf der Außenfläche von Vorteil.

In einem ersten Ausführungsbeispiel des Ventilators verläuft die Innenfläche der Abdeckscheibe geradlinig nach radial außen. In einem zweiten Ausführungsbeispiel weist die Abdeckscheibe auch auf ihrer Innenfläche nach radial außen einen schrägen oder gekrümmten Verlauf in Richtung des Rotorglockenbodens auf. Insbesondere ist dann günstig, wenn die Innenfläche und die Außenfläche der Abdeckscheibe parallel verlaufen.

Die Abdeckscheibe ist vorzugsweise an der Laufradnabe des Ventilatorrades angeordnet oder einstückig durch die Laufradnabe gebildet und kann somit eine zusammenwirkende Strömungsverbindung zwischen der Abdeckscheibe und der Laufradnabe gewährleisten.

Vorteilhaft ist dabei eine Ausführung, bei der die Außenfläche der Abdeckscheibe unmittelbar in eine Laufradnabenfläche der Laufradnabe, an welcher die Laufradschaufeln angeordnet oder ausgebildet sind, übergeht. Es besteht dann eine direkte Strömungsverbindung zwischen der Abdeckscheibe und der Laufradnabe, entlang der auch die Hauptströmung geführt ist.

Ferner ist eine Ausgestaltung des Ventilators dadurch gekennzeichnet, dass die Laufradnabe in radialer Richtung den mindestens einen Durchbruch des Rotorglockenbodens überstreckt und eine koaxiale Öffnung zu dem mindestens einen Durchbruch bestimmt. Der Kühlkanal zwischen der Abdeckscheibe und dem Rotorglockenboden wird dann einseitig von der Laufradnabe bestimmt.

In einer Ausführungsform des Ventilators weist die Laufradnabe einen sich in den mindestens einen Durchbruch des Rotorglockenbodens hinein erstreckenden Abschnitt auf, der eine Auskleidung des mindestens einen Durchbruchs des Rotorglockenbodens bestimmt. Dabei ist eine Ausführung vorteilhaft, bei der die Abdeckscheibe unmittelbar angrenzend an oder radial beabstandet zu einem radialen Außenrand des mindestens einen Durchbruchs angeordnet ist. Zudem ist dies insbesondere auch dann günstig, wenn auch die Innenfläche der Abdeckscheibe einen schrägen oder gekrümmten Verlauf aufweist.

Bei dem Ventilator kann als eine Variante ein im Wesentlichen umlaufender Durchbruch in dem Rotorglockenboden vorgesehen sein. Jedoch ist eine Ausführung bevorzugt, die dadurch gekennzeichnet, dass in dem Rotorglockenboden eine Vielzahl von in Umfangsrichtung zueinander beabstandeten Durchbrüchen vorgesehen ist, welche jeweils einen Durchmesser D aufweisen. Strömungstechnisch und mithin geräuschtechnisch günstig ist dabei eine Lösung, bei der die Größe der Zentralöffnung in ein bestimmtes Verhältnis zu dem Durchmesser der Durchbrüche gesetzt wird. Die Zentralöffnung der Abdeckscheibe ist hierzu kreisförmig ausgebildet und weist einen Durchmesser DPS auf. Dieser Durchmesser DPS liegt vorzugweise in einem Bereich, der bestimmt ist von dem Produkt aus der Wurzel aus der Anzahl der Durchbrüche und dem Durchmesser D der Durchbrüche bis zu dem Produkt aus der Anzahl der Durchbrüche und dem Durchmesser D der Durchbrüche.

Konstruktiv ist eine erfindungsgemäße Ausgestaltung des Ventilators vorteilhat, bei der das Ventilatorrad eine integral mit der Laufradnabe gebildete Bodenscheibe und eine Deckscheibe aufweist, zwischen denen in axialer Richtung gesehen die Laufradschaufeln und die Abdeckscheibe angeordnet sind.

Ferner ist eine Ausführung des Ventilators günstig, welche eine rotationssymmetrisch ausgebildete Abdeckscheibe vorsieht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    eine schematische Schnittansicht eines Ventilators in einer ersten Ausführungsvariante,

Fig. 2    eine Detailansicht zur Anordnung der Abdeckscheibe gemäß der Ausführung in Figur 1,

Fig. 3    eine schematische Schnittansicht eines Ventilators in einer zweiten Ausführungsvariante, welche nicht Teil der Erfindung ist,

Fig. 4    eine Detailansicht zur Anordnung der Abdeckscheibe in der Ausführung gemäß Figur 3.

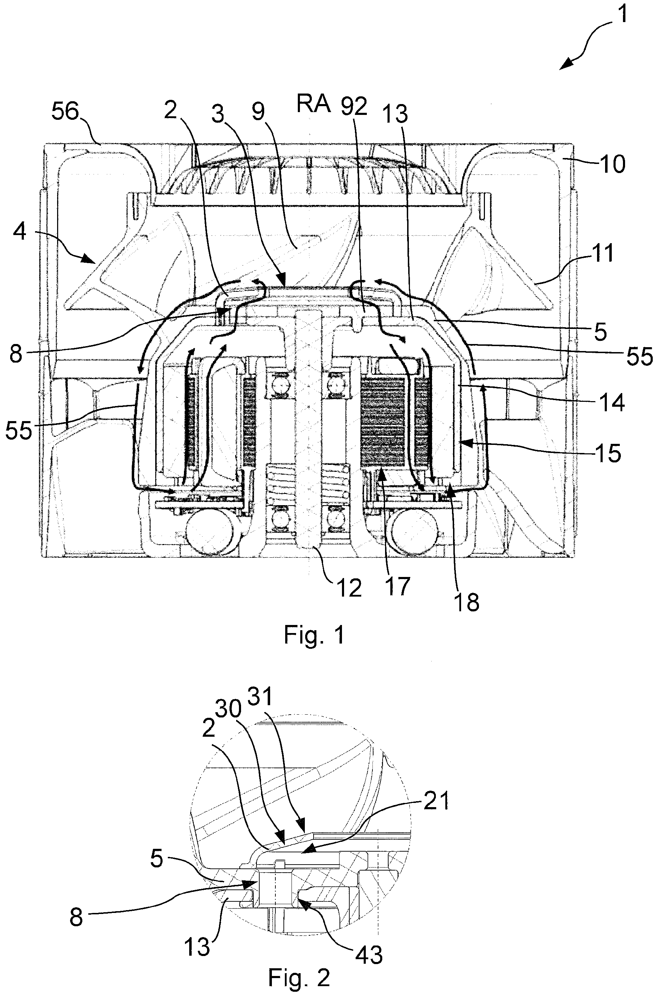

In Figur 1 ist der Ventilator 1 ausgebildet als Ausführungsbeispiel eines Diagonalventilators schematisch in einer seitlichen Schnittansicht dargestellt. In dem zweiteiligen Gehäuse 10 sind das Ventilatorrad 4 und der Elektromotor mit dem Stator 17 und dem um die Rotationsachse RA rotierbaren, auf der über mehrere Lager gelagerten Lüfterachse 12 angeordneten Rotor 18 aufgenommen. Axial an das Ventilatorrad 4 anschließend ist die Einlaufdüse 56 an dem Gehäuse 10 befestigt. Das Ventilatorrad 4 umfasst eine Deckscheibe 11, in einem Schaufelkranz angeordnete Laufradschaufeln 9 und eine Bodenscheibe 92, welche integraler Bestandteil der Laufradnabe 5 ist. Der Rotor 18 umfasst die Rotorglocke 15 gebildet aus dem axial stirnseitigen Rotorglockenboden 13 und dem Rotorglockenmantel 14, welche von der Laufradnabe 5 umschlossen sind. In dem Rotorglockenboden 13 ist eine Vielzahl von in Umfangsrichtung verteilt angeordneten Durchbrüchen 8 zur Gewährleistung des Kühlluftstromes 55 zwischen dem Inneren der Rotorglocke 15 und einem Bereich des Ventilatorrades 4 vorgesehen ist.

Die Ausführung in Figur 1 zeigt zwei Varianten des durch die Pfeile gekennzeichneten Kühlluftstromes 55. Linksseitig der Rotationsachse RA verläuft der Kühlluftstrom 55 gegen den Uhrzeigersinn aus dem Inneren der Rotorglocke 15 heraus in den Bereich des Ventilatorrades 4, rechtsseitig der Rotationsachse RA ist die Variante dargestellt, bei welcher der Kühlluftstrom 55 im Uhrzeigersinn aus dem Bereich des Ventilatorrades 4 ins Innere der Rotorglocke 15 hinein strömt. Die Strömungsrichtung ist abhängig von der durch das Ventilatorrad 4 erzeugten Hauptströmung des Ventilators 1.

An dem Rotorglockenboden 13 ist über die Laufradnabe 5 die rotationssymmetrische Abdeckscheibe 2 angeordnet und erstreckt sich von der Laufradnabe 5 in axialer und radial einwärtiger Richtung hin zur Rotationsachse RA. Die Abdeckscheibe 2 weist um die Rotationsachse RA die kreisförmige Zentralöffnung 3 auf und überdeckt die Durchbrüche 8 des Rotorglockenbodens 13 axial beabstandet in einer Weise, dass zwischen dem Rotorglockenboden 13 und der Innenfläche 30 der Abdeckscheibe 2 der sich radial einwärts zur Rotationsachse RA und zur Zentralöffnung 3 der Abdeckscheibe 2 hin erstreckende Strömungskanal 21 gebildet ist. Entlang dem Rotorglockenboden 13 verläuft in der gezeigten Ausführung zusätzlich noch ein Teil der Laufradnabe 5 bis zur Lüfterachse 12 und erstreckt sich zudem in die Durchbrüche 8 hinein, wo die Laufradnabe 5 eine Wandauskleidung 43 der Durchbrüche 8 bestimmt, wie es in Figur 2 zu erkennen ist. Die Detailansicht der Figur 2 stimmt nicht exakt mit der Ausführung der Figur 1 überein, ist jedoch unmittelbar in der Gestaltung auf die Konstruktion gemäß Figur 1 anwendbar. Die Abdeckscheibe 2 grenzt mit ihrer Innenfläche 30 in radialer Richtung gesehen unmittelbar an die Durchbrüche 8 an, so dass der Kühlluftstrom 55 unmittelbar im Bereich der Durchbrüche 8 eine Umlenkung durch die Abdeckscheibe 2 erfährt.

Die Abdeckscheibe 2 weist als Ganzes und mithin sowohl auf ihrer Außenfläche 31 als auch ihrer Innenfläche 30 von dem Rand der Zentralöffnung 3 einen schrägen, gegenüber einer Radialebene gewinkelten Verlauf in Richtung des Rotorglockenbodens 13 auf, der in einen gebogenen Verlauf übergeht. Der Kühlluftstrom 55 strömt über die schräge Außenfläche 31 der Abdeckscheibe 2 und die unmittelbar angrenzende Laufradnabe 5. Die Beeinflussung des Kühlluftstromes 55 unmittelbar vor bzw. nach den Durchbrüchen 8, je nachdem welche Strömungsrichtung man betrachtet, führt zur Geräuschreduzierung.

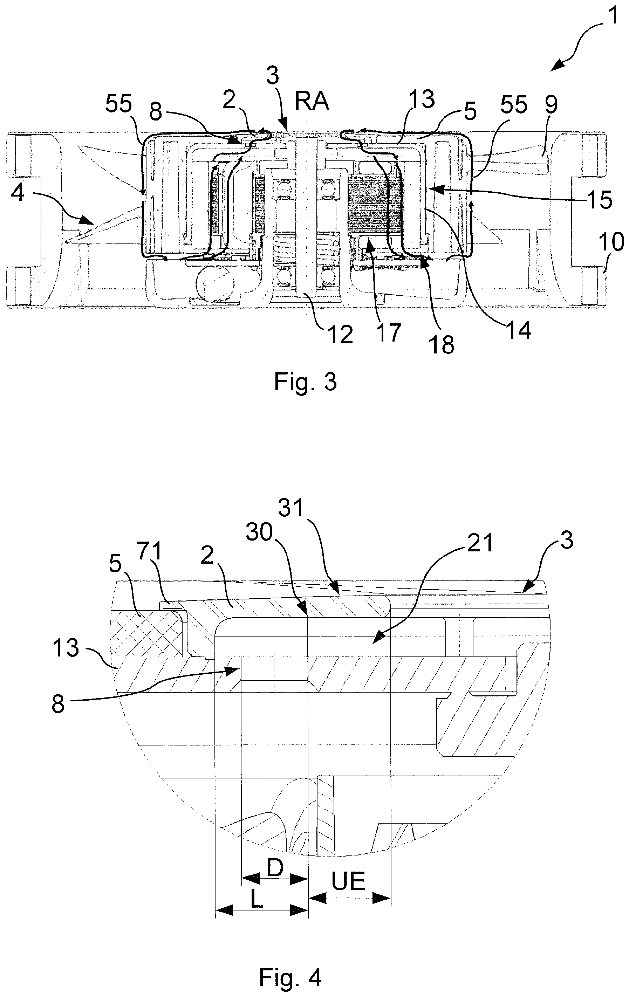

Figur 3 zeigt ein zweites Ausführungsbeispiel des Ventilators 1 ausgebildet als Axialventilator, wobei die für die Ausführung gemäß Figur 1 offenbarten Merkmale ebenfalls gelten, soweit sie nicht anders beschrieben sind. Der Aufbau ist deutlich kompakter, da die Laufradschaufeln 9 des Ventilatorrades 4 radial außenseitig gegenüber dem Stator 17 und Rotor 18 angeordnet sind. Figur 4 zeigt eine Detailansicht des Bereichs des Ventilators, in dem die Abdeckscheibe 2 angeordnet ist. Die Abdeckscheibe 2 liegt unmittelbar auf dem Rotorglockenboden 13 auf, da die Laufradnabe 5 in dieser Ausführung sich nur bis zur Abdeckscheibe 2 erstreckt. Ein Radialvorsprung 71 an der Abdeckscheibe 2 überdeckt einen Bereich, in dem die Abdeckscheibe 2 und die Laufradnabe 5 stoßend aneinander grenzen und gegebenenfalls einen Spalt bilden. Innenseitig ist die Abdeckscheibe 2 mit ihrer Innenfläche 30 in radialer Richtung gesehen zu den Durchbrüchen 8 beabstandet. Es ist jedoch auch eine Ausführung umfasst, bei der die Abdeckscheibe 2 unmittelbar an die Durchbrüche 8 angrenzt, wie es in Figur 2 gezeigt ist. Die Innenfläche 30 der Abdeckscheibe 2 verläuft in der Radialebene, die Außenfläche 31 verläuft hingegen geradlinig schräg nach radial außen in Richtung des Rotorglockenbodens 13, so dass die Außenfläche 31 der Abdeckscheibe 2 unmittelbar in die Laufradnabenfläche der Laufradnabe 5 übergeht. Der Rand der Zentralöffnung 3 ist abgerundet.

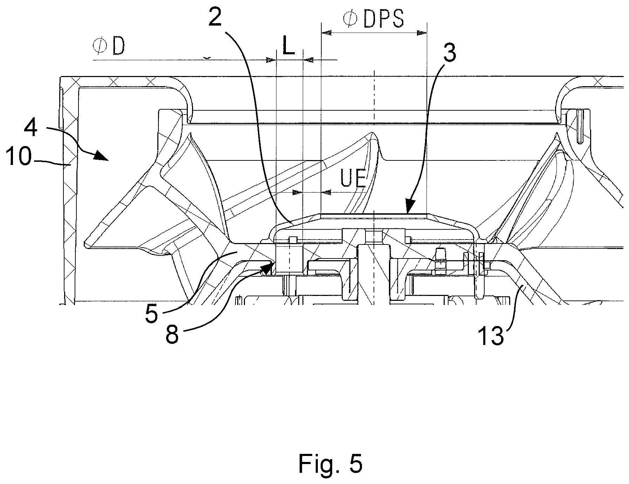

Bezugnehmend auf die Figuren 4 und 5 sind für die Ausführungsbeispiele der Durchmesser D der jeweiligen Durchbrüche 8 und der Durchmesser DPS der Zentralöffnung 3 gekennzeichnet. Die Abdeckscheibe 2 weist in beiden Ausführungen den Überstreckungsabschnitt L auf, der die Durchbrüche 8 in radialer Richtung vollständig überstreckt. Bei der Ausführung gemäß Figur 5 sind der Durchmesser D der jeweiligen Durchbrüche 8 und der Überstreckungsabschnitt L identisch. Unmittelbar anschließend an den Überstreckungsabschnitt L ist an der Abdeckscheibe 2 der Überlappungsabschnitt UE vorgesehen, in dem sich die Abdeckscheibe 2 radial einwärts über die Durchbrüche 8 hinaus erstreckt und dabei mit dem an die Durchbrüche 8 radial einwärts angrenzenden Bereich des Rotorglockenbodens 13 überlappt. Der Überlappungsabschnitt UE weist in der Ausführung gemäß Figur 4 ein Verhältnis zum Durchmesser der Durchbrüche 8 von 1,3, bei der Ausführung gemäß Figur 5 von 0,7 auf. Das Verhältnis wird vorzugsweise in einem Bereich zwischen 0,5 und 1,5 nach Bedarf angepasst. Der Durchmesser DPS der Zentralöffnung 3 ist in beiden Ausführungen größer als die Summe aus Überstreckungsabschnitt L und Überlappungsabschnitt UE.

## Patentansprüche

1. Ventilator (1) umfassend ein Ventilatorrad (4) mit einer Laufradnabe (5) und Laufradschaufeln (9) sowie einen Elektromotor mit einem Stator (17), einem um einen Rotationsachse (RA) rotierbaren Rotor (18) und einer Rotorglocke (15), welche einen axial stirnseitigen Rotorglockenboden (13) aufweist, wobei die Laufradnabe (5) an der Rotorglocke (15) befestigt ist, wobei in dem Rotorglockenboden (13) mindestens ein Durchbruch (8) zur Gewährleistung eines Kühlluftstromes (55) aus der Rotorglocke (15) oder in die Rotorglocke (15) vorgesehen ist, wobei der Ventilator (1) ferner eine an dem Rotorglockenboden (13) angeordnete Abdeckscheibe (2) mit einer Zentralöffnung (3) aufweist, wobei die Abdeckscheibe (2) den mindestens einen Durchbruch (8) des Rotorglockenbodens (13) axial beabstandet zumindest abschnittsweise überdeckt, so dass zwischen dem Rotorglockenboden (13) und einer Innenfläche (30) der Abdeckscheibe (2) ein sich radial einwärts erstreckender Strömungskanal (21) zur Zentralöffnung (3) der Abdeckscheibe (2) gebildet ist, und wobei die Abdeckscheibe (2) zumindest auf ihrer Außenfläche (31) nach radial außen einen schrägen oder gekrümmten Verlauf in Richtung des Rotorglockenbodens (13) aufweist, **dadurch gekennzeichnet, dass** das Ventilatorrad (4) eine integral mit der Laufradnabe (5) gebildete Bodenscheibe (92) und eine Deckscheibe (11) aufweist, zwischen denen in axialer Richtung gesehen die Laufradschaufeln (9) und die Abdeckscheibe (2) angeordnet sind.

2. Ventilator nach Anspruch 1, **dadurch gekennzeichnet, dass** die Abdeckscheibe (2) einen Überstreckungsabschnitt (L) aufweist, der den mindestens einen Durchbruch (8) in radialer Richtung vollständig überstreckt.

3. Ventilator nach Anspruch 1, **dadurch gekennzeichnet, dass** die Abdeckscheibe (2) einen Überstreckungsabschnitt (L), der den mindestens einen Durchbruch (8) in radialer Richtung vollständig überstreckt, und einen sich an den Überstreckungsabschnitt (L) unmittelbar anschließenden Überlappungsabschnitt (UE) aufweist, in dem die Abdeckscheibe (2) sich über den mindestens einen Durchbruch (8) hinaus erstreckt und mit dem an den mindestens einen Durchbruch (8) radial einwärts angrenzenden Rotorglockenboden (13) überlappt.

4. Ventilator nach dem vorhergehenden Anspruch, **dadurch gekennzeichnet, dass** der mindestens eine Durchbruch (8) als Öffnung mit einem Durchmesser D ausgebildet ist und eine Erstreckung des Überlappungsabschnitts (UE) in radialer Richtung eine Länge aufweist, dass gilt $0{,}5 \leq UE/D \leq 1{,}5$.

5. Ventilator nach einem der vorhergehenden Ansprüche, **dadurch gekennzeichnet, dass** sich der schräge oder gekrümmte Verlauf der Außenfläche (31) der Abdeckscheibe (2) durchgängig ausgehend von einem Rand der Zentralöffnung (3) der Abdeckscheibe (2) erstreckt.

6. Ventilator nach einem der vorhergehenden Ansprüche, **dadurch gekennzeichnet, dass** die Abdeckscheibe (2) an der Laufradnabe (5) angeordnet oder einstückig durch die Laufradnabe (5) gebildet ist.

7. Ventilator nach einem der vorhergehenden Ansprüche, **dadurch gekennzeichnet, dass** die Abdeckscheibe (2) auf ihrer Innenfläche (30) nach radial außen einen schrägen oder gekrümmten Verlauf in Richtung des Rotorglockenbodens (13) aufweist.

8. Ventilator nach einem der vorhergehenden Ansprüche, **dadurch gekennzeichnet, dass** die Außenfläche der Abdeckscheibe (2) unmittelbar in eine Laufradnabenfläche der Laufradnabe (5), an welcher die Laufradschaufeln (9) angeordnet oder ausgebildet sind, übergeht.

9. Ventilator nach einem der vorhergehenden Ansprüche, **dadurch gekennzeichnet, dass** die Laufradnabe (5) in radialer Richtung den mindestens einen Durchbruch (8) des Rotorglockenbodens (13) überstreckt und eine koaxiale Öffnung zu dem mindestens einen Durchbruch (8) bestimmt.

10. Ventilator nach einem der vorhergehenden Ansprüche, **dadurch gekennzeichnet, dass** die Laufradnabe (5) einen sich in den mindestens einen Durchbruch (8) des Rotorglockenbodens (13) hinein erstreckenden Abschnitt aufweist, der eine Auskleidung des mindestens einen Durchbruchs (8) des Rotorglockenbodens (13) bestimmt.

11. Ventilator nach einem der vorhergehenden Ansprüche, **dadurch gekennzeichnet, dass** die Abdeckscheibe (2) unmittelbar angrenzend an oder radial beabstandet zu einem radialen Außenrand des mindestens einen Durchbruchs (8) angeordnet ist.

12. Ventilator nach einem der vorhergehenden Ansprüche, **dadurch gekennzeichnet, dass** in dem Rotorglockenboden (13) eine Vielzahl von in Umfangsrichtung zueinander beabstandeten Durchbrüchen (8) vorgesehen ist, welche jeweils einen Durchmesser D aufweisen.

13. Ventilator nach dem vorigen Anspruch, **dadurch gekennzeichnet, dass** die Zentralöffnung (3) der Abdeckscheibe (2) kreisförmig ist und einen Durchmesser DPS aufweist, der bestimmt ist durch einen Bereich aus

$$\sqrt{\text{Anzahl der Durchbrüche}} * D \leq DPS \leq D * \text{Anzahl der Durchbrüche}.$$

14. Ventilator nach einem der vorhergehenden Ansprüche, **dadurch gekennzeichnet, dass** die Abdeckscheibe (2) rotationssymmetrisch ausgebildet ist.

**Claims**

1. A fan (1), comprising a fan wheel (4) with an impeller hub (5) and impeller blades (9) as well as an electric engine with a stator (17), a rotor (18) which can be rotated about a rotation axis (RA) and a rotor bell (15) which has a rotor bell base (13) at the axial end face, wherein the impeller hub (5) is fastened to the rotor bell (15), wherein at least one breakthrough (8) for ensuring a cooling air flow (55) from the rotor bell (15) or into the rotor bell (15) is provided in the rotor bell base (13), wherein the fan (1) further has a cover disc (2) with a central opening (3) arranged on the rotor bell base (13), wherein the cover disc (2) covers the at least one breakthrough (8) of the rotor bell base (13) in an axially spaced-apart manner at least in sections so that a flow channel (21) extending radially inwards to the central opening (3) of the cover disc (2) is formed between the rotor bell base (13) and an inner surface (30) of the cover disc (2), and wherein the cover disc (2) has, at least on its outer surface (31), a radially outward oblique or curved course in the direction of the rotor bell base (13), **characterised in that** the fan wheel (4) has a base disc (92) formed integrally with the impeller hub (5) and a cover disc (11) between which, as seen in the axial direction, the impeller blades (9) and the cover disc (2) are arranged.

2. The fan according to claim 1, **characterised in that** the cover disc (2) has an overstretching section (L) which completely overstretches the at least one breakthrough (8) in the radial direction.

3. The fan according to claim 1, **characterised in that** the cover disc (2) has an overstretching section (L) which completely overstretches the at least one breakthrough (8) in the radial direction and an overlapping section (UE) directly adjoining the overstretching section (L) and in which the cover disc (2) extends beyond the at least one breakthrough (8) and overlaps with the rotor bell base (13) adjoining the at least one breakthrough (8) radially inwards.

4. The fan according to the preceding claim, **characterised in that** the at least one breakthrough (8) is formed as an opening with a diameter D and an extension of the overlapping section (UE) has a length in the radial direction so that $0.5 \leq UE/D \leq 1.5$ applies.

5. The fan according to any one of the preceding claims, **characterised in that** the oblique or curved course of the outer surface (31) of the cover disc (2) extends continuously starting from an edge of the central opening (3) of the cover disc (2).

6. The fan according to any one of the preceding claims, **characterised in that** the cover disc (2) is arranged on the impeller hub (5) or integrally formed through the impeller hub (5).

7. The fan according to any one of the preceding claims, **characterised in that** the cover disc (2) has a radially outward oblique or curved course in the direction of the rotor bell base (13) on its inner surface (30).

8. The fan according to any one of the preceding claims, **characterised in that** the outer surface of the cover disc (2) directly transitions into an impeller hub surface of the impeller hub (5) on which the impeller blades (9) are arranged or formed.

9. The fan according to any one of the preceding claims, **characterised in that** the impeller hub (5) overstretches the at least one breakthrough (8) of the rotor bell base (13) in the radial direction and determines a coaxial opening to the at least one breakthrough (8).

10. The fan according to any one of the preceding claims, **characterised in that** the impeller hub (5) has a section extending into the at least one breakthrough (8) of the rotor bell base (13) which determines a lining of the at least one breakthrough (8) of the rotor bell base (13).

11. The fan according to any one of the preceding claims, **characterised in that** the cover disc (2) is arranged directly adjacent to or radially spaced apart from a radial outer edge of the at least one breakthrough (8).

12. The fan according to any one of the preceding claims, **characterised in that** a plurality of circumferentially spaced apart breakthroughs (8), each having a diameter D, is provided in the rotor bell base (13).

**13.** The fan according to the preceding claim, **characterised in that** the central opening (3) of the cover disc (2) is circular and has a diameter DPS which is determined by a range of

$$\sqrt{number\ of\ breakthroughs}\ *D \leq DPS \leq D*number\ of\ the\ breakthroughs\ .$$

**14.** The fan according to any one of the preceding claims, **characterised in that** the cover disc (2) is formed in a rotationally symmetrical manner.


**Revendications**

**1.** Ventilateur (1) comprenant une roue de ventilateur (4) avec un moyeu de roue (5) et des aubes de roue (9) ainsi qu'un moteur électrique avec un stator (17), un rotor (18) pouvant tourner autour d'un axe de rotation (RA) et une cloche de rotor (15) qui présente un fond de cloche de rotor axialement frontal (13), le moyeu de roue (5) étant fixé à la cloche de rotor (15), au moins une ouverture (8) étant prévue dans le fond de cloche de rotor (13) pour garantir un flux d'air de refroidissement (55) depuis la cloche de rotor (15) ou vers la cloche de rotor (15), le ventilateur (1) comportant en outre un disque de recouvrement (2) disposé sur le fond de cloche de rotor (13) et présentant une ouverture centrale (3), le disque de recouvrement (2) recouvrant au moins partiellement, à distance axiale, l'au moins une ouverture (8) du fond de cloche de rotor (13), de sorte qu'entre le fond de cloche de rotor (13) et une surface intérieure (30) du disque de recouvrement (2) se forme un canal d'écoulement (21) s'étendant radialement vers l'intérieur vers l'ouverture centrale (3) du disque de recouvrement (2), et le disque de recouvrement (2) présentant, au moins sur sa surface extérieure (31), un tracé oblique ou courbé vers l'extérieur dans la direction du fond de cloche de rotor (13), **caractérisé en ce que** la roue de ventilateur (4) présente un disque de fond (92) formé d'un seul tenant avec le moyeu de roue (5) et un disque de recouvrement (11), entre lesquels sont disposées, dans le sens axial, les aubes de roue (9) et le disque de recouvrement (2).

**2.** Ventilateur selon la revendication 1, **caractérisé en ce que** la plaque de recouvrement (2) présente une partie de recouvrement (L) qui recouvre complètement l'au moins une ouverture (8) dans le sens radial.

**3.** Ventilateur selon la revendication 1, **caractérisé en ce que** la plaque de recouvrement (2) présente une partie en surplomb (L) qui recouvre complètement l'au moins une ouverture (8) dans le sens radial, et une partie de chevauchement (UE) directement adjacente à la partie de recouvrement (L), dans lequel le disque de recouvrement (2) s'étend au-delà de l'au moins une ouverture (8) et chevauche le fond de cloche de rotor (13) adjacent radialement vers l'intérieur à l'au moins une ouverture (8).

**4.** Ventilateur selon la revendication précédente, **caractérisé en ce que** l'au moins une ouverture (8) est réalisée sous la forme d'une ouverture d'un diamètre D et que l'étendue de la partie de chevauchement (UE) dans la direction radiale présente une longueur telle que $0,5 \leq UE/D \leq 1,5$.

**5.** Ventilateur selon l'une quelconque des revendications précédentes, **caractérisé en ce que** le tracé oblique ou courbe de la surface extérieure (31) de la plaque de recouvrement (2) s'étend de manière continue à partir d'un bord de l'ouverture centrale (3) de la plaque de recouvrement (2).

**6.** Ventilateur selon l'une quelconque des revendications précédentes, **caractérisé en ce que** la plaque de recouvrement (2) est disposée sur le moyeu de roue (5) ou est formée d'un seul tenant par le moyeu de roue (5).

**7.** Ventilateur selon l'une quelconque des revendications précédentes, **caractérisé en ce que** la plaque de recouvrement (2) présente, sur sa surface intérieure (30), une courbure ou une inclinaison vers l'extérieur dans le sens radial, en direction du fond de cloche de rotor (13).

**8.** Ventilateur selon l'une quelconque des revendications précédentes, **caractérisé en ce que** la surface extérieure du disque de recouvrement (2) se raccorde directement à une surface du moyeu de roue (5) sur laquelle sont disposées ou formées les aubes de roue (9).

**9.** Ventilateur selon l'une quelconque des revendications précédentes, **caractérisé en ce que** le moyeu de roue (5) s'étend dans le sens radial au-delà de l'au moins une ouverture (8) du fond de cloche de rotor (13) et définit une ouverture coaxiale à l'au moins une ouverture (8).

**10.** Ventilateur selon l'une quelconque des revendications précédentes, **caractérisé en ce que** le moyeu de roue (5) présente une partie s'étendant dans au moins une ouverture (8) du fond de cloche de rotor (13), qui définit un revêtement de l'au moins une ouverture (8) du fond de cloche de rotor (13).

**11.** Ventilateur selon l'une quelconque des revendications précédentes, **caractérisé en ce que** la plaque de recouvrement (2) est disposée directement adjacente à ou espacée radialement d'un bord extérieur radial de l'au moins une ouverture (8).

**12.** Ventilateur selon l'une des revendications précédentes, **caractérisé en ce qu'**une pluralité d'ouvertures (8) espacées les unes des autres dans la direction circonférentielle sont prévues dans la base de cloche de rotor (13), chacune ayant un diamètre D.

**13.** Ventilateur selon la revendication précédente, **caractérisé en ce que** l'ouverture centrale (3) de la plaque de recouvrement (2) est circulaire et présente un diamètre DPS qui est déterminé par une plage de

$$\sqrt{nombre\ d'ouvertures}*D \leq DPs \leq D*nombre\ d'ouvertures.$$

**14.** Ventilateur selon l'une quelconque des revendications précédentes, **caractérisé en ce que** la plaque de recouvrement (2) est symétrique en rotation.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- DE 102013108506 A1
- DE 102005006183 A1
- US 2002141866 A1
- JP H10210727 A
- JP 2015139225 A
- US 2007152519 A1
- EP 3540238 A1